# EUROPÄISCHE PATENTSCHRIFT

(11) **EP 2 773 693 B1**
(45) Veröffentlichungstag und Bekanntmachung des Hinweises auf die Patenterteilung: **19.08.2015**
(21) Anmeldenummer: 12783943.9
(22) Anmeldetag: 30.10.2012
(51) Int. Cl.: C08J 7/00

(54) **VERFAHREN ZUR BESCHICHTUNG VON KUNSTSTOFFSUBSTRATEN**
METHOD FOR COATING PLASTIC SUBSTRATES
PROCÉDÉ DE REVÊTEMENT DE SUBSTRATS EN MATIÈRE PLASTIQUE

(30) Priorität: 31.10.2011 US 201161553276 P; 31.10.2011 EP 11187279
(43) Veröffentlichungstag der Anmeldung: 10.09.2014
(73) Patentinhaber: BASF Coatings GmbH, 48165 Münster (DE)
(72) Erfinder: ANDERSEN, Audrée, 48159 Münster (DE); RAKA, Fatmir, 48149 Münster (DE)
(74) Vertreter: Leifert & Steffan
(86) Internationale Anmeldenummer: PCT/EP2012/071504
(87) Internationale Veröffentlichungsnummer: WO 2013/064506

(56) Entgegenhaltungen:
- EP-A2- 1 113 040
- US-A1- 2006 222 873

## Beschreibung

Die vorliegende Erfindung betrifft ein Verfahren zur Beschichtung von Kunststoffsubstraten mit einem wässrigen Beschichtungsmittel. Das Verfahren kann beispielsweise im Bereich der Fahrzeuglackierung, beispielsweise bei der Lackierung von Fahrzeugteilen und -zubehörteilen, Anwendung finden.

### Stand der Technik

Kunststoffe haben sich im Rahmen der Fahrzeuglackierung als Materialien für Fahrzeugteile sowie Fahrzeuganbau- und -zubehörteile sowohl im Innen- als auch im Außenbereich durchgesetzt. Kunststoffe werden ebenso wie andere Werkstoffe aus dekorativen Gründen (beispielsweise Farbgebung) und/oder aufgrund technischer Zweckmäßigkeit (beispielsweise Licht- und Wetterbeständigkeit) mit entsprechenden Beschichtungsmitteln beschichtet beziehungsweise lackiert. Eine wichtige Voraussetzung für eine qualitativ hochwertige Beschichtung ist die Haftung zum Untergrund, das heißt zur Substratoberfläche. Es ist allgemein bekannt, dass gerade bei der Beschichtung beziehungsweise Lackierung von Kunststoffen, insbesondere von unpolaren Kunststoffen, wie Polypropylen (PP) in reiner Form oder in modifizierter Form (beispielsweise durch Zusatz von Ethylen-Propylen-Dien-Mischpolymeren (EPDM)), mitunter gravierende Haftungsprobleme zum Kunststoffuntergrund auftreten können. Um eine akzeptable Haftung des jeweiligen Beschichtungsmittels zu erreichen, werden solche unpolaren Kunststoffe herkömmlich einer oberflächenaktivierenden Vorbehandlung unterworfen. Die am häufigsten angewendeten Verfahren sind das Beflammen, die Plasmabehandlung und die Corona-Entladung. Ebenso ist es bekannt, zur Haftungsverbesserung haftungsvermittelnde Substanzen, insbesondere chlorierte Polyolefine, einzusetzen. Der Einsatz der haftungsvermittelnden Substanzen erfolgt beispielsweise über Haftprimer, die die haftungsvermittelnden Substanzen enthalten und in einem separaten Beschichtungsvorgang auf das Kunststoffsubstrat appliziert werden. Ebenfalls möglich ist der direkte Zusatz von haftungsvermittelnden Substanzen zu dem Beschichtungsmittel, mit dem die dekorative und/oder technisch zweckmäßige Beschichtung hergestellt werden soll.

Selbst bei oberflächenaktivierender Vorbehandlung ist die Haftung von Beschichtungsmitteln auf Kunststoffsubstraten nicht immer ausreichend, sodass sich Beschichtungen von lackierten Kunststoffteilen durch beispielsweise Witterungseinflüsse oder mechanische Beanspruchung sukzessive ablösen. Auch der Einsatz von haftungsvermittelnden Substanzen führt nicht immer zu optimalen Haftungseigenschaften. Hinzu kommt, dass die Verwendung von haftungsvermittelnden Substanzen, insbesondere chlorierten Polyolefinen, unter ökologischen Gesichtspunkten sehr nachteilig ist. Beim Einsatz wässriger Beschichtungsmittel, die sich aus ökologischen Gesichtspunkten auch in der Kunststoffbeschichtung immer mehr durchsetzen, sind die Haftungsprobleme insbesondere bei der Lackierung von unpolaren Kunststoffsubstraten aufgrund der Polaritätsunterschiede der beiden Medien, dem Kunststoffsubstrat und dem Beschichtungsmittel, noch verstärkt.

In der Patentanmeldung DE 199 61 983 A1 wird ein Verfahren zur Beschichtung von insbesondere unpolaren Kunststoffen mit wasserbasierten haftungsvermittelnden Überzugsmitteln offenbart, wobei die durch das Verfahren erhaltenen Beschichtungen eine gute Haftung aufweisen. Allerdings muss das Kunststoffsubstrat vor der Applikation der Überzugsmittel mit mindestens einem spezifischen organischen Lösemittel gereinigt werden. Vor der Reinigung kann ein Temperprozess des Substrats erfolgen, wobei die für den Prozess angegebenen Temperatur- und Zeitbedingungen im Bereich von 50 bis 80°C für etwa 30 bis 90 Minuten liegen. Nach der Reinigung erfolgt in der Regel ein Abdunstungsprozess der zur Reinigung verwendeten organischen Lösemittel im Zeitbereich von einer oder mehrerer Stunden, bevor das Überzugsmittel appliziert wird. Das Überzugsmittel enthält zudem mindestens einen Haftvermittler, insbesondere ein chloriertes Polyolefin.

US 2006/0222873 A1 betrifft ein Verfahren zur Herstellung beschichteter Kunststoffsubstratmodule umfassend die Schritte der Bereitstellung eines Kunststoffsubstrats, der Bildung eines modulierenden Films auf dem Kunststoffsubstrat, wobei der modulierende Film aus partiell stabilisiertem Zirkonoxid hergestellt wird, Bildung einer organischen Beschichtung auf dem modulierenden Film und Tempern des so behandelten Kunststoffsubstrats, welches den modulierenden Film und die organische Beschichtung trägt.

### Aufgabe der Erfindung

Aufgabe der vorliegenden Erfindung war es, ein Verfahren zur Beschichtung von Kunststoffsubstraten mit einem wässrigen Beschichtungsmittel bereitzustellen, welches es gestattet, Kunststoffsubstrate mit einer Beschichtung beziehungsweise Lackschicht zu versehen, deren Haftung auf dem jeweiligen Kunststoffsubstrat ausgezeichnet ist. Insbesondere sollte die Haftung der nach dem erfindungsgemäßen Verfahren hergestellten Beschichtungen wesentlich besser sein als von Lackschichten, die auf Kunststoffsubstraten aufgebracht wurden, die eine herkömmliche Vorbehandlung mittels Beflammung erfahren haben. Gleichzeitig ist es Aufgabe der Erfindung den Einsatz von haftungsvermittelnden Substanzen, insbesondere chlorierten Polyolefinen, vermeiden zu können. Trotzdem sollten dann die beschriebenen hervorragenden Haftungseigenschaften erreicht werden. Zudem soll es mit dem Verfahren möglich sein, die oben genannten Eigenschaften, insbesondere die ausgezeichnete Haftung, zu erreichen und dabei gleichzeitig auf eine im Vergleich zum Stand der Technik nur wenig Zeit beanspruchende Vorbehandlung des Substrats zurückgreifen zu können. Insbesondere soll auf eine Reinigung der Substratoberfläche mit organischen Lösemitteln verzichtet werden können. Dadurch wird die Möglichkeit gegeben, das Verfahren insbesondere vorteilhaft im Rahmen von Lackierprozessen einzusetzen, bei denen eine hohe Durchsatzrate gewünscht ist. Insbesondere zu nennen ist dabei der Bereich der Automobilserienlackierung.

### Erfindungsgemäße Lösung

Erfindungsgemäß wird die Aufgabe gelöst durch ein Verfahren zur Beschichtung von Kunststoffsubstraten mit einem wässrigen Beschichtungsmittel enthaltend mindestens ein organisches Polymer als Bindemittel, wobei das Beschichtungsmittel auf die Oberfläche des Kunststoffsubstrats appliziert wird und anschließend gehärtet wird,
dadurch gekennzeichnet, dass
das Kunststoffsubstrat vor der Applikation des Beschichtungsmittels vorbehandelt wird, wobei die Vorbehandlung die beiden folgenden separaten Schritte in der angegebenen Reihenfolge umfasst:
(A) Tempern eines Kunststoffsubstrats bei einer Umgebungstemperatur im Bereich von 60°C bis 160°C für eine Zeitdauer im Bereich von 1 min bis 20 min,
(B) Beflammung der Oberfläche des gemäß Schritt (A) vorbehandelten Ku nststoffsu bstrats,
wobei zwischen dem Beenden von Schritt (A) und dem Beginn von Schritt (B) eine Zeitdauer von maximal 90 min liegt.

Das Verfahren zur Beschichtung von Kunststoffsubstraten wird in der Folge als erfindungsgemäßes Verfahren bezeichnet. Weitere, bevorzugte Ausführungsformen des erfindungsgemäßen Verfahrens ergeben sich aus der folgenden Beschreibung.

Es wurde festgestellt, dass durch das erfindungsgemäße Verfahren beziehungsweise die damit verbundene zweistufige Vorbehandlung der Kunststoffsubstrate Beschichtungen resultieren, die eine ausgezeichnete Haftung auf Kunststoffsubstraten, insbesondere unpolaren Kunststoffsubstraten, besitzen. Insbesondere wird eine bessere Haftung erreicht als auf Kunststoffsubstraten, welche lediglich durch Beflammung vorbehandelt wurden. Zudem ist keine zwingende Reinigung der Substratoberfläche mit organischen Lösemitteln vor der Applikation des Beschichtungsmittels notwendig, um eine gute Haftung zu erreichen. Da die Vorbehandlung eine nur geringe Zeit in Anspruch nimmt, ist das Verfahren insbesondere im Rahmen von Lackierprozessen einsetzbar, bei denen eine hohe Durchsatzrate gewünscht und wichtig ist. Zu nennen ist hierbei beispielsweise die Automobilserienlackierung.

### Wässriges Beschichtungsmittel

Als wässriges Beschichtungsmittel können im Rahmen des erfindungsgemäßen Verfahrens die dem Fachmann geläufigen Beschichtungsmittel eingesetzt werden. Das Beschichtungsmittel enthält mindestens ein organisches Polymer als Bindemittel. Diese organischen Polymere sind beispielsweise die dem Fachmann bekannten Polyurethan-, Polyester- und/oder Epoxidharze. Ebenfalls möglich ist der Einsatz von an sich bekannten Polyacrylat- und Polymethacrylatharzen (im Folgendem als Poly(meth)acrylatharze bezeichnet). Die genannten organischen Polymere als Bindemittel enthalten vorzugsweise zusätzlich unterschiedliche funktionelle Gruppen zur chemischen Vernetzung, wobei Hydroxygruppen bevorzugt sind. Bevorzugt werden Polyurethan-, Polyester- und/oder Poly(meth)acrylatharze, welche bevorzugt Hydroxygruppen enthalten, als Bindemittel eingesetzt. Solche organischen Polymere beziehungsweise Harze werden beispielsweise im Römpp-Lexikon Lacke und Druckfarben, Georg Thieme Verlag, Stuttgart, New York, 1998, Seiten 73 bis 74, beschrieben. Die Dispergierbarkeit der organischen Polymere beziehungsweise Harze in Wasser kann über die dem Fachmann geläufigen Maßnahmen durchgeführt werden. Dabei kann es sich um die ionische Modifizierung der organischen Polymere durch Einführung von Monomeren, die beispielsweise Carboxylat- oder Sulfonatgruppen enthalten, handeln. Möglich ist auch die nichtionische Modifizierung durch beispielsweise Polyglykoletherketten oder der Einsatz von bestimmten, weiter unten beschriebenen Additiven wie Dispergiermitteln, beispielsweise Emulgatoren.

Die organischen Polymere können physikalisch härtend und/oder chemisch härtend, das heißt chemisch vernetzend sein. Im letzteren Fall können die organischen Polymere selbst- und/oder fremdvernetzend sein. Dies heißt, dass die komplementären funktionellen Gruppen, die unter Härtungsbedingungen, beispielsweise Hitze, reagieren und damit einen vernetzten Beschichtungsfilm bilden, in ein und dem selben organischen Polymer vorliegen können (selbstvernetzend). Möglich ist aber auch, dass die komplementären funktionellen Gruppen in unterschiedlichen Verbindungen vorliegen (fremdvernetzend).

Bei fremdvernetzenden Systemen sind beispielsweise neben den oben angeführten Harzsystemen zusätzlich vollveretherte und/oder teilveretherte Aminoplastharze, monomere und/oder polymere Polyamine sowie monomere und/oder polymere blockierte und/oder freie Polyisocyanate im wässrigen Beschichtungsmittel als Vernetzer enthalten. Im Rahmen des erfindungsgemäßen Verfahrens werden bevorzugt vollveretherte und/oder teilveretherte Aminoplastharze, insbesondere bevorzugt vollveretherte und/oder teilveretherte Melamin-Formaldehyd-Harze eingesetzt.

Die Auswahl und Kombination von geeigneten organischen Polymeren und Monomeren, beispielsweise von geeigneten Polyurethan-, Polyester-, Poly(meth)acrylat- und/oder Epoxidharzen mit geeigneten funktionellen Gruppen, vorzugsweise Hydroxygruppen, und gegebenenfalls Aminoplastharzen, Polyaminen und/oder Polyisocyanaten erfolgt je nach den gewünschten und/oder erforderlichen Eigenschaften des herzustellenden Beschichtungssystems. Eine weiteres Auswahlkriterium sind die gewünschten und/oder erforderlichen Härtungsbedingungen, insbesondere die Härtungstemperaturen. Wie eine solche Auswahl zu treffen ist, ist dem Fachmann auf dem Gebiet bekannt und kann von diesem entsprechend angepasst werden. Möglich sind dabei die an sich bekannten Ein-Komponenten sowie Zwei-Komponenten-Beschichtungssysteme (vergleiche hierzu auch Römpp-Lexikon Lacke und Druckfarben, Georg Thieme Verlag, Stuttgart, New York, 1998, Seiten 274-276, sowie Seiten 641-642). Bevorzugt kommen Ein-Komponenten Systeme zum Einsatz.

Besonders bevorzugt wird im Rahmen des erfindungsgemäßen Verfahrens eine Kombination aus mindestens einem hydroxyfunktionellen Polyurethan-, Polyester- und/oder Poly(meth)acrylatharz als Bindemittel und mindestens einem vollveretherten und/oder teilveretherten Melamin-Formaldehyd-Harz als Vernetzer eingesetzt.

Vorteilhafterweise liegt der Anteil aller filmbildenden Komponenten, insbesondere des mindestens einen hydroxyfunktionellen Polyurethan-, Polyester- und/oder Poly(meth)acrylatharzes als Bindemittel und des mindestens einem vollveretherten und/oder teilveretherten Melamin-Formaldehyd-Harz als Vernetzers im Bereichen von 10 bis 90 Gew.-%, insbesondere von 15 bis 60 Gew.-%, besonders bevorzugt im Bereich von 20 bis 50 Gew.-%, jeweils bezogen auf die Gesamtmenge des wässrigen Beschichtungsmittels. Der Anteil eines jeweils separat betrachteten Harzes als Bindemittel sowie eines Vernetzers liegt vorteilhafterweise nicht unter 3 Gew.-%, bezogen auf die Gesamtmenge des wässrigen Beschichtungsmittels. Des Weiteren kann das wässrige Beschichtungsmittel mindestens ein übliches und bekanntes farbgebendes und/oder effektgebendes Pigment enthalten. Vorteilhafterweise enthält das Beschichtungsmittel mindestens ein Pigment.

Beispiele für solche Pigmente sind Pigmente auf anorganischer Basis, wie beispielsweise Titandioxid, Eisenoxid und Ruß oder auch übliche Metallpigmente (beispielsweise handelsübliche Aluminiumbronzen, Edelstahlbronzen) und nichtmetallische Effektpigmente (beispielsweise Perlglanz- beziehungsweise Interferenzpigmente). Auch farbgebende Pigmente auf organischer Basis wie Azopigmente und Phthalocyaninpigmente können zum Einsatz kommen. Der Anteil von Pigmenten am Beschichtungsmittel liegt beispielsweise im Bereich von 0 bis 20 Gew.-%, bevorzugt 2 bis 10 Gew.-%, jeweils bezogen auf die Gesamtmenge des wässrigen Beschichtungsmittels. Die Auswahl von Art und einzusetzender Menge von Pigmenten erfolgt in der dem Fachmann geläufigen Art und Weise und richtet sich nach den erforderlichen beziehungsweise gewünschten Eigenschaften des Beschichtungsmittels. Ergänzend sei hierzu auf Römpp-Lexikon Lacke und Druckfarben, Georg Thieme Verlag, Stuttgart, New York, 1998, Seite 451, verwiesen.

Des Weiteren können die wässrigen Beschichtungsmittel neben Wasser auch organische Lösemittel enthalten. Enthalten sein können beispielsweise aliphatische und/oder aromatische Kohlenwasserstoffe wie Toluol, Xylol, Solventnaphtha, Solvesso 100, Shellsol A, Ketone, wie Aceton, Methylethylketon oder Methylamylketon, Ester, wie Ethylacetat, Butylacetat, Pentylacetat oder Ethylethoxypropionat, Ether wie Butylglycol, Dipropylenglycolmethylether, Alkohole wie Ethylhexanol, Butoxypropanol, Isopropanol oder Butyldiglycol oder Mischungen aus den vorgenannten Lösemitteln. Bevorzugt eingesetzt werden wassermischbare organische Lösemittel.

Das einzusetzende Beschichtungsmittel ist wässrig. Wässrig ist eine dem Fachmann geläufige Spezifizierung von Beschichtungsmitteln, die als Lösemittel nicht ausschließlich organische Lösemittel enthalten, sondern auch auf Wasser als Lösemittel basieren. Wässrig bedeutet im Rahmen der vorliegenden Erfindung insbesondere, dass das Beschichtungsmittel mindestens 10 Gew.-%, bevorzugt mindestens 20, ganz besonders bevorzugt mindestens 25 Gew.-% Wasser, jeweils bezogen auf die Gesamtmenge des Beschichtungsmittels, enthält. Besonders bevorzugt ist wässrig so zu verstehen, dass neben der genannten Anforderung "mindestens 10 Gew.-% (beziehungsweise mindestens 20 oder 25 Gew.-%) Wasser, bezogen auf die Gesamtmenge des Beschichtungsmittels" als weitere Voraussetzung zu erfüllen ist, dass der Anteil organischer Lösemittel in dem Beschichtungsmittel kleiner als 25 Gew.-%, insbesondere kleiner als 20 Gew.-%, jeweils bezogen auf die Gesamtmenge des Beschichtungsmittels, ist.

Weiterhin kann in dem wässrigen Beschichtungsmittel mindestens ein an sich bekanntes Lackadditiv enthalten sein. Solche Lackadditive sind beispielsweise, aber nicht ausschließlich,
- Entschäumer,
- Reaktivverdünner,
- Polymerisationsinhibitoren,
- Slipadditive,
- Netzmittel wie Siloxane, fluorhaltige Verbindungen, Carbonsäurehalbester
- Katalysatoren, wie acide phosphorhaltige Katalysatoren auf Basis von beispielsweise substituierten Phosphonsäurediestern oder substituierten Phosphorsäureestern,
- Verlaufmittel,
- rheologiesteuernde Additive,
- Dispergiermittel,
- UV-Stabilisatoren,
- Füllstoffe wie Siliciumdioxid, Aluminiumsilikat oder Bariumsulfat
- und/oder Flammschutzmittel.

Solche Lackadditive sind beispielsweise im Handel von unterschiedlichen Anbietern erhältlich. Der Anteil eines jeweiligen Additivs liegt vorteilhafterweise bei maximal 10 Gew.-%, insbesondere bei maximal 5 Gew.-%, besonders bevorzugt bei maximal 3 Gew.-%, jeweils bezogen auf die Gesamtmenge des wässrigen Beschichtungsmittels. Bevorzugt ist das wässrige Beschichtungsmittel im Wesentlichen frei von chlorierten Polyolefinen, insbesondere im Wesentlichen frei von jeglichen haftungsvermittelnden Substanzen. Im Rahmen der vorliegenden Erfindung ist "im Wesentlichen frei von" einer jeweiligen Substanz(en) so zu verstehen, dass das wässrige Beschichtungsmittel nicht mehr als 5 Gew.-%, insbesondere nicht mehr als 2,5 Gew.-%, besonders bevorzugt nicht mehr als 2,0 Gew.-%, ganz besonders bevorzugt nicht mehr als 1,0 Gew.-% der jeweiligen Substanz(en), jeweils bezogen auf die Gesamtmenge des Beschichtungsmittels, enthält. In einer ganz besonders bevorzugten Ausführungsform ist das wässrige Beschichtungsmittel vollständig frei von chlorierten Polyolefinen, insbesondere vollständig frei von jeglichen haftungsvermittelnden Substanzen.

Insbesondere handelt es sich bei dem wässrigen Beschichtungsmittel um einen wässrigen Basislack. Als Basislack wird bekanntermaßen ein pigmenthaltiges Beschichtungsmittel bezeichnet, dass insbesondere in der Automobillackierung aber auch in der allgemeinen Industrielackierung zum Aufbau einer farbgebenden Beschichtung, insbesondere einer farbgebenden Zwischenbeschichtung im Rahmen einer Mehrschichtlackierung auf beispielsweise einem Kunststoffsubstrat eingesetzt werden kann. Auf der so aufgebauten Zwischenbeschichtung wird dann häufig eine Klarlackschicht aufgebaut, wodurch die Mehrschichtbeschichtung hergestellt wird.

Die Herstellung des wässrigen Beschichtungsmittels, insbesondere des wässrigen Basislacks, weist methodisch gesehen keine Besonderheiten auf, sondern erfolgt nach den üblichen und bekannten Methoden mit Hilfe von üblichen und bekannten Mischaggregaten wie Rührkesseln oder Dissolvern.

### Einzusetzende Kunststoffsubstrate

Bei den durch das erfindungsgemäße Verfahren zu beschichtenden beziehungsweise zu lackierenden Kunststoffsubstraten handelt es sich um solche aus üblichen Kunststoffen wie beispielsweise Polystyrol (PS), Polyvinylchlorid (PVC), Polyurethan (PUR), glasfaserverstärkte ungesättigte Polyester, Polymethylmethacrylat (PMMA), Polyphenylensulfid (PPS), Polyoxymethylen (POM), Polyphenylenether (PPE), Polyphenylenoxid (PPO), Polyharnstoff, Polybutadienterephthalat (PBT), Polycarbonat (PC), Acrylnitril-Butadien-StyrolCopolymere (ABS), Polyolefine wie Polypropylen (PP) und Polypropylen (PP) modifiziert mit Ethylen-Propylen-Dien-Mischpolymeren (EPDM). Möglich sind dabei auch Kunststoffsubstrate, die verschiedene der genannten Kunststoffe, demnach also Mischungen dieser Kunststoffe, enthalten.

Besonders vorteilhaft kann das erfindungsgemäße Verfahren eingesetzt werden zur Beschichtung von unpolaren Kunststoffen, wie insbesondere Polyolefinen wie PP und von mit EPDM-Anteilen modifiziertem PP. Die Modifizierung von PP mit EPDM dient im Wesentlichen der Elastifizierung des Kunststoffs und bestimmt unter anderem auch die Lackierbarkeit. Bei geringen EPDM-Anteilen ist die Lackierbarkeit beziehungsweise die Haftung in der Regel schlecht. Erst bei EPDM-Anteilen von etwa 20 bis 25 Gew.-% spricht man in der Regel nicht mehr von schwer lackierbaren Kunststoffen. Das erfindungsgemäße Verfahren kann aber ganz besonders vorteilhaft eingesetzt werden zur Lackierung von Polypropylen/EPDM-Kunststoffen mit niedrigen EPDM-Anteilen von beispielsweise nicht höher als 25 Gew.-%, insbesondere nicht höher als 20 Gew.-%.

Bei den Kunststoffsubstraten kann es sich um einfache Kunststoffplatten handeln. Möglich sind als Substrate aber auch Fahrzeugkarosserien aus Kunststoffen oder bestimmte Fahrzeugteile sowie Fahrzeuganbau- und -zubehörteile für sowohl den Fahrzeuginnen- als auch den Fahrzeugaußenbereich.

### Vorbehandlung der Kunststoffsubstrate

Die im Rahmen des erfindungsgemäßen Verfahrens zu beschichtenden Kunststoffsubstrate erfahren vor der Applikation des wässrigen Beschichtungsmittels eine Vorbehandlung, die zwei separate, hintereinander durchzuführende Schritte (Schritt (A) und Schritt (B)) umfasst. Bevorzugt besteht die Vorbehandlung aus diesen beiden Schritten. Dies bedeutet insbesondere, dass bevorzugt keine weiteren speziellen Vorbehandlungsschritte, wie beispielsweise die Reinigung mit organischen Lösemitteln oder die Behandlung der Substratoberfläche mit aktinischer Strahlung, stattfinden. Das Substrat wird, abgesehen von den beiden Schritten (A) und (B), lediglich transportiert, gelagert und/oder verpackt.

In Schritt (A) erfolgt ein Tempern des jeweiligen Kunststoffsubstrats bei einer Umgebungstemperatur im Bereich von 60°C bis 160°C, vorzugsweise im Bereich von 70°C bis 120°C und insbesondere im Bereich von 75°C bis 90°C. Das Tempern erfolgt für eine Zeitdauer im Bereich von 1 Minute bis 20 Minuten, vorzugsweise im Bereich von 3 min bis 8 min, insbesondere im Bereich von 4 min bis 6 min.

Im Rahmen der vorliegenden Erfindung wird unter Tempern die Lagerung eines Materials beziehungsweise eines Gegenstands bei einer bestimmten, im Vergleich zur Raumtemperatur erhöhten Umgebungstemperatur für eine bestimmte Zeitdauer verstanden, wobei das jeweilige Material dabei seine ursprüngliche Form beibehält und sich nicht verformt. Als Material oder Gegenstand ist im Rahmen der Erfindung ein Kunststoffsubstrat, beispielsweise eine Kunststoffplatte oder ein wie oben definiertes Kunststoffbauteil zur Verwendung im Fahrzeugbau, gemeint. Als Umgebungstemperatur wird im Rahmen der vorliegenden Erfindung die Temperatur bezeichnet, die der Raum oder die Umgebung hat, in dem sich ein Kunststoffsubstrat befindet, das heißt also in dem ein Kunststoffsubstrat beispielsweise gelagert wird oder auf irgendeine Weise bewegt, bearbeitet oder behandelt wird. Als Raumtemperatur wird im Rahmen der vorliegenden Erfindung eine Umgebungstemperatur im Bereich von 10 bis 30°C, insbesondere 15 bis 25°C, speziell 20°C, verstanden.

Im Rahmen der Erfindung erfolgt das Tempern beispielsweise in einem Umluftofen mit verschließbarer Tür. Es muss gewährleistet sein, dass Bedingungen gegeben sind, bei denen das gesamte Kunststoffsubstrat einer im Vergleich zur Raumtemperatur erhöhten Umgebungstemperatur, das heißt im Rahmen der Erfindung einer Temperatur im Bereich von 60°C bis 160°C, ausgesetzt ist. Schwankungen in der Umgebungstemperatur treten vorzugsweise lediglich durch beispielsweise das vorübergehende Öffnen der verschließbaren Tür des Umluftofens auf, da durch ein solches Öffnen ein Wärmeaustausch zwischen Ofenraum und Außenraum ermöglicht wird und sich die Temperatur im Ofen nach erneutem Schließen der Tür erst nach einer gewissen Zeitdauer wieder auf die voreingestellte Umgebungstemperatur eingestellt hat.

Nach Ablauf der gewünschten beziehungsweise notwendigen Zeitdauer des Temperns wird das Kunststoffsubstrat aus dem geschlossenen Raum mit im Vergleich zur Raumtemperatur erhöhter Umgebungstemperatur entfernt und damit der erste Teil (Schritt (A)) der im Rahmen des erfindungsgemäße Verfahrens stattfindenden Substratvorbehandlung beendet.

Wie bereits oben angegeben, ist es selbstverständlich, dass das Kunststoffsubstrat im Rahmen des beschriebenen Temperprozesses seine ursprüngliche Form beibehält und sich nicht verformt. Die Temperatur und gegebenenfalls die Zeitdauer des Temperns, insbesondere die Temperatur, ist also so zu wählen, dass das jeweilige Kunststoffsubstrat beim Tempern nicht so hoch erhitzt wird, dass es sich verformt. Dem Fachmann auf dem Gebiet ist jedenfalls bekannt, bei welcher Temperatur sich welches Kunststoffsubstrat verformt beziehungsweise ab welcher Temperatur die Erweichung des jeweiligen Materials auftritt. Die entsprechenden Bedingungen können also problemlos auf den entsprechenden Einzelfall angepasst werden.

Das Kunststoffsubstrat wird, wie bereits oben angegebenen, bei einer Umgebungstemperatur im Bereich von 60°C bis 160°C, insbesondere jedoch maximal bei einer Umgebungstemperatur, die mindestens 5°C, insbesondere vorteilhaft mindestens 10°C, geringer ist als die Vicat-Erweichungstemperatur des jeweils eingesetzten Kunststoffsubstrats, getempert. Diese bevorzugte Ausführungsform, bei der die Umgebungstemperatur beim Tempern auf die Vicat-Erweichungstemperatur bezogen ist, beschränkt sich natürlich auf solche Kunststoffsubstrate, deren Vicat-Erweichungstemperatur mindestens bei 65°C liegt, sodass die erfindungsgemäß einzuhaltende Umgebungstemperatur des Schritts (A) im Bereich von 60°C bis 160°C in jedem Fall realisiert werden kann.

Die Vicat-Erweichungstemperatur ist gemäß DIN EN ISO 306 als die Temperatur definiert, bei der eine abgeflachte, runde Nadelspitze mit einer Flächengröße von 1 mm² in eine Tiefe von 1 mm in das Kunststoffmaterial eindringt, wobei auf die Nadel eine Kraft von 10 Newton wirkt und das Kunststoffmaterial mit einer Aufheizrate von 50°C pro Stunde aufgeheizt wird.

In Schritt (B) erfolgt die Beflammung des nach Schritt (A) vorbehandelten Kunststoffsubstrats. Es kann die gesamte Oberfläche oder lediglich ein Teil der Oberfläche beflammt werden. Unter Beflammung wird die dem Fachmann bekannte Definition verstanden. Demnach ist mit Beflammen ein Vorgang gemeint, bei dem man den oxidierenden Teil einer Flamme auf die Oberfläche eines Materials beziehungsweise Gegenstands, hier ein Kunststoffsubstrat, einwirken lässt. In der über das Kunststoffsubstrat geführten Flamme beziehungsweise dem oxidierenden Teil der Flamme liegen bei der Verbrennung nicht verbrauchter Sauerstoff, aus der Umgebung in die heiße Flamme diffundierender Sauerstoff und die typischen Verbrennungsprodukte (beispielsweise CO₂, H₂O) teilweise in aktivierter Form vor. Diese sehr reaktiven Radikale (z.B. O, OH) können die langkettigen Kunststoffmoleküle in der Oberfläche aufbrechen und sich an die Bruchstellen anbinden. Dadurch entstehen polare Anteile in den Molekülen, sodass beispielsweise die Polarität, die Oberflächenspannung und die Benetzbarkeit des Substrats verändert werden. Ergänzend sei auf Römpp-Lexikon Lacke und Druckfarben, Georg Thieme Verlag, Stuttgart, New York, 1998, Seite 59 verwiesen.

Zur Erzeugung der Flamme können typische und dem Fachmann geläufige Beflammungsgeräte wie Handbeflammungsgeräte, Durchlaufbeflammungsanlagen und über Roboter gesteuerte Beflammungsgeräte eingesetzt werden. Je nach struktureller Beschaffenheit des zu beflammenden Substrats und der gewünschten Durchsatzrate können die entsprechenden Geräte und Anlagen ausgewählt werden. So kommen Handbeflammungsgeräte eher in Bereichen zum Einsatz, wo nur kleine Serien von eher geringer Stückzahl zu beflammen sind. Ist die Vorbehandlung von Kunststoffsubstraten in großer Stückzahl gewünscht, beispielsweise im Rahmen der Automobilserienlackierung, können beispielsweise zu beflammende Kunststoffplatten mit Hilfe von Förderbändern an einem fest installierten Beflammungsgerät vorbeigeführt werden. Ebenfalls können komplex geformte Bauteile mit Hilfe von mit Robotern gesteuerten Beflammungseinheiten vorbehandelt werden. Gängig eingesetzte Beflammungsgeräte und Beflammungsanlagen sind beispielsweise von der Firma Kirchgässner Elektrotechnik erhältlich.

Für die Beflammung charakteristische Parameter sind der Abstand der Flamme vom Bauteil beziehungsweise der Materialoberfläche (Flammenzone), die Dauer der Einwirkung der Flamme und die Flammeneinstellung (Mischungsverhältnis Brenngas/Luft). Diese Parameter sind dem Fachmann auf dem Gebiet geläufig und können je nach vorliegendem Einzelfall ohne großen Aufwand geprüft beziehungsweise optimal eingestellt werden. Insbesondere vorteilhaft ist es im Rahmen der vorliegenden Erfindung mit einem Propan/Luft- oder Methan/LuftGemisch zu beflammen, wobei das jeweilige Brenngas/Luft-Volumenverhältnis im Bereich von 1/15 bis 1/40 liegt. Der Durchsatz des Brenngas/Luft-Gemisches, insbesondere des Propan/Luft- oder Methan/Luft-Gemisches kann beispielsweise im Bereich von 250 l/min - 600 l/min liegen, je nach Art und Größe der jeweils gewählten Beflammungsanlage.

Vorteilhafterweise liegt der Substrat/Flammenabstand in den allgemein gewählten Bereichen, insbesondere in einem Bereich von 0,01 bis 15 cm, besonders vorteilhaft von 0,1 bis 12 cm, ganz besonders bevorzugt von 0,5 bis 10 cm.

Die Einwirkungsdauer der Flamme auf das Kunststoffsubstrat liegt ebenfalls in den dem Fachmann bekannten Bereichen und kann von diesem je nach Lage des Einzelfalls angepasst werden. Die Einwirkdauer kann beispielsweise im Bereich von 0,01 bis 0,5, vorzugsweise von 0,02 bis 0,2, insbesondere von 0,02 bis 0,1 Sekunden liegen.

Wird das Substrat zur Beflammung auf beispielsweise einem Förderband, Fließband oder auch über einen beweglichen Roboterarm, an den das Substrat durch über eine Vakuumpumpe erzeugten Unterdruck angesaugt ist, an einer fest installierten Beflammungsanlage vorbeigeführt, einer erfindungsgemäß bevorzugten Variante, werden die Bandgeschwindigkeit des Förderbandes oder die Geschwindigkeit des Roboterarms und die Breite der Beflammungszone der Beflammungsanlage, gemeint ist die Breite der Zone, in der die Flamme auf das Substrat einwirken kann, vorteilhafterweise so gewählt, dass die Einwirkungsdauer der Flamme im oben genannten Bereich liegt.

Die Beflammung kann in einem einzigen Beflammungsschritt erfolgen. Möglich ist allerdings auch die mehrfache Beflammung in einem Beflammungszyklus, wobei dann insbesondere 2 bis 10, besonders bevorzugt 2 bis 5 einzelne Beflammungsschritte, jeweils nach dem oben beschriebenen Verfahren, durchgeführt werden. Die Zeiten zwischen den einzelnen Beflammungsschritten können dabei im Prinzip frei gewählt werden; insbesondere erfolgen die einzelnen Beflammungsschritte zügig, das heißt in Zeiten von 1 bis 120 Sekunden, bevorzugt 1 bis 60 Sekunden, ganz besonders bevorzugt 1 bis 30 Sekunden, hintereinander.

Es ist erfindungswesentlich, dass zwischen dem Beenden von Schritt (A) und dem Beginn von Schritt (B) eine Zeitdauer von maximal bis zu 90 min, vorzugsweise im Bereich von 1 min bis 60 min, besonders bevorzugt im Bereich von 4 min bis 40 min und ganz besonders bevorzugt im Bereich von 5 bis 20 min liegt.

Wird die Beflammung (Schritt (B)) in einem Beflammungszyklus mit mehreren Beflammungsschritten durchgeführt, so ist mit der Zeitdauer zwischen dem Beenden von Schritt (A) und dem Beginn des Schritts (B) die Zeitdauer bis zum Beginn des ersten Beflammungsschritts des Beflammungszyklus in Schritt (B) gemeint.

### Herstellung von Beschichtungen auf Kunststoffsubstraten

Die Applikation des wässrigen Beschichtungsmittels auf ein wie oben beschrieben vorbehandeltes Kunststoffsubstrat kann durch alle üblichen Applikationsmethoden, wie beispielsweise Spritzen, Rakeln, Streichen, Giessen, Tauchen, Tränken, Träufeln oder Walzen, vorzugsweise durch Spritzapplikation, erfolgen. Dabei kann das zu beschichtende Kunststoffsubstrat als solches ruhen, wobei die Applikationseinrichtung oder -anlage bewegt wird. Indes kann auch das zu beschichtende Substrat bewegt werden, wobei die Applikationsanlage relativ zum Substrat ruht oder in geeigneter Weise bewegt wird. Vorzugsweise werden Spritzapplikationsmethoden angewandt, wie zum Beispiel Druckluftspritzen (pneumatische Applikation), Airless-Spritzen, Hochrotation, elektrostatischer Sprühauftrag (ESTA), gegebenenfalls verbunden mit Heissspritzapplikation wie zum Beispiel Hot-Air-Heissspritzen.

Die Applikation des wässrigen Beschichtungsmittels erfolgt augenblicklich nach der Vorbehandlung. Vorteilhafterweise liegt zwischen dem Ende der Vorbehandlung und dem Beginn der Applikation eine Zeit von 5 min bis 24 h, ganz besonders bevorzugt eine Zeit von 20 min bis 120 min.

Das auf das Kunststoffsubstrat applizierte wässrige Beschichtungsmittel wird gehärtet, wodurch eine Beschichtung hergestellt wird. Die Härtung des applizierten wässrigen Beschichtungsmittels weist keine methodischen Besonderheiten auf, sondern erfolgt nach den üblichen und bekannten Methoden wie beispielsweise Erhitzen in einem Umluftofen oder durch Bestrahlen mit IR-Lampen. Möglich ist auch die aktinische Härtung durch beispielsweise UV-Strahlung bei strahlenhärtenden Systemen. Die Härtungsbedingungen, insbesondere die Härtungstemperaturen, richten sich beispielsweise nach der Temperaturempfindlichkeit der verwendeten Kunststoffsubstrate sowie nach den eingesetzten wässrigen Beschichtungsmitteln, beispielsweise danach, ob das jeweils eingesetzte wässrige Beschichtungsmittel selbst- oder fremdvernetzende Bindemittel und gegebenenfalls Vernetzer enthält. So kann die Härtung zum Beispiel im Bereich der Raumtemperatur oder auch bei erhöhten Temperaturen im Bereich von beispielsweise 40°C bis 120°C, bevorzugt von 60°C bis 90°C erfolgen. Auch die Zeitdauer der Härtungsphase wird individuell gewählt und ist unter anderem abhängig von den schon genannten Faktoren (beispielsweise Wahl der Bindemittel und/oder der Härtungstemperaturen). Beispielsweise kann die Härtung über einen Zeitraum von 5 min bis 120 min, bevorzugt 10 min bis 40 min, erfolgen. Der Härtung kann gegebenenfalls auch eine Ablüft- beziehungsweise Vortrocknungsphase vorausgehen, beispielsweise bei Raumtemperatur für eine Zeitdauer von 1 bis 60 min. Welche Härtungsbedingungen bei welchen Substraten und/oder Beschichtungsmitteln anzuwenden sind, gehört zum allgemeinen Fachwissen auf dem Gebiet, sodass die Bedingungen vom Fachmann angepasst und ausgewählt werden können.

Die Applikation des wässrigen Beschichtungsmittels erfolgt in den üblichen und bekannten Schichtdicken, beispielsweise in Nassfilmschichtdicken von 10 bis 200 Mikrometer, vorzugsweise von 50 bis 150 Mikrometer. Die dabei resultierenden Trockenfilmschichtdicken nach der Härtung liegen dann beispielsweise im Bereich von 2 bis 40 Mikrometer, insbesondere 5 bis 20 Mikrometer.

Ein weiterer Gegenstand der vorliegenden Erfindung ist ein beschichtetes Kunststoffsubstrat, welches dadurch gekennzeichnet ist, dass es durch das erfindungsgemäße Verfahren beschichtet wurde.

Die nach dem erfindungsgemäßen Verfahren hergestellte Beschichtung auf einem Kunststoffsubstrat kann die einzige Beschichtung des jeweiligen Kunststoffsubstrats sein oder aber auf der nach dem erfindungsgemäßen Verfahren hergestellten Beschichtung können weitere Beschichtungen hergestellt werden, wodurch eine Mehrschichtbeschichtung hergestellt wird. Dies bedeutet dann, dass das erfindungsgemäße beschichtete Kunststoffsubstrat mit einer Mehrschichtbeschichtung beschichtet ist.

In einer bevorzugten Ausführungsform der Erfindung wird auf der nach dem erfindungsgemäßen Verfahren hergestellten Beschichtung ein weiteres Beschichtungsmittel appliziert und gehärtet beziehungsweise eine weitere Beschichtung hergestellt. Insbesondere handelt es sich dabei um einen Klarlack beziehungsweise um eine Klarlackschicht. Bekanntermaßen ist ein Klarlack ein Beschichtungsstoff, der nach Applikation und Härtung eine transparente Beschichtung (die Klarlackschicht) mit schützenden und/oder dekorativen Eigenschaften bildet. Unter schützenden Eigenschaften sind beispielsweise Kratzfestigkeit und Witterungsbeständigkeit, insbesondere UV-Beständigkeit, zu verstehen. Als dekorative Eigenschaft ist beispielsweise ein guter Glanz zu verstehen. Bei den einzusetzenden Klarlacken handelt es sich um die auf dem Gebiet der Kunststofflackierung üblich verwendeten Klarlacke, deren Auswahl und Einsatz dem Fachmann bekannt ist (vergleiche hierzu auch Römpp-Lexikon Lacke und Druckfarben, Georg Thieme Verlag, Stuttgart, New York, 1998, Seite 325). Die generellen Applikations- und Härtungsmethoden des weiteren Beschichtungsmittels, insbesondere des Klarlacks, entsprechen denen, wie sie weiter oben für das wässrige Beschichtungsmittel beschrieben wurden. Bevorzugt wird die Mehrschichtbeschichtung durch nass-in-nass-Lackierung hergestellt. Dies bedeutet, dass das weitere Beschichtungsmittel, insbesondere der Klarlack, auf dem applizierten wässrigen Beschichtungsmittel appliziert wird, ohne das letzteres zuvor separat gehärtet wird. Die Härtung der beiden applizierten Beschichtungsmittel erfolgt dann gemeinsam, wodurch die Mehrschichtbeschichtung, insbesondere eine Zweischichtbeschichtung, resultiert.

Die Applikation des weiteren Beschichtungsmittels, insbesondere des Klarlacks, erfolgt in den üblichen und bekannten Schichtdicken, beispielsweise in Nassfilmschichtdicken von 50 bis 250 Mikrometer, vorzugsweise von 100 bis 180 Mikrometer. Die dabei resultierenden Trockenfilmschichtdicken nach der Härtung liegen dann beispielsweise im Bereich von 15 bis 80 Mikrometer, insbesondere 25 bis 50 Mikrometer.

Insgesamt eignen sich damit die beschichteten Kunststoffsubstrate, die nach dem erfindungsgemäßen Verfahren beschichtet wurden, für das ästhetisch und technisch anspruchsvolle Gebiet der Fahrzeuglackierung, insbesondere der Automobillackierung. Die beschichteten Kunststoffsubstrate, insbesondere die mit einer Mehrschichtbeschichtung beschichteten Kunststoffsubstrate, können als Fahrzeugteile und Fahrzeuganbau- und -zubehörteile sowohl für den Innen- als auch im Außenbereich von Fahrzeugen verwendet werden. Neben einer hervorragenden Haftung der hergestellten Beschichtungen beziehungsweise Mehrschichtbeschichtungen, lässt sich zudem ein guter und variabler dekorativer Effekt erzielen.

Die nach dem erfindungsgemäßen Verfahren zur Beschichtung von Kunststoffsubstraten hergestellten Beschichtungen beziehungsweise Lackschichten besitzen zudem eine ausgezeichnete Haftung. Die Haftung ist zudem wesentlich besser als die Haftung von Beschichtungen auf Kunststoffsubstraten, die auf herkömmliche Weise durch ausschließliche Beflammung vorbehandelt wurden.

Insbesondere vorteilhaft ist an dem erfindungsgemäßen Verfahren, dass bei der Vorbehandlung des Kunststoffsubstrats keine separate vorbereitende Reinigung des Kunststoffsubstrats unter Einsatz von beispielsweise organischen Lösemitteln erfolgen muss, sondern dass das erfindungsgemäße Beschichtungsverfahren auch ohne eine solche Reinigung zu Beschichtungen beziehungsweise Lackierungen führt, die eine exzellente Haftung aufweisen.

Die Erfindung wird anhand der folgenden Beispiele näher erläutert.

### Beispiele

Es wurden verschiedene Kunststoffsubstrate, jeweils in Form von Testplatten mit einer Größe von 10 x 10 x 0,3 cm oder 100 x 100 x 3 cm, mit unterschiedlichen wässrigen Beschichtungsmitteln beschichtet. Als Kunststoffwerkstoffe wurden unterschiedliche PP/EPDM-Mischungen sowie eine PC/ABS-Mischung eingesetzt.

### A) Vorbehandlung von Kunststoffsubstraten

### 1.) Vorbehandlung nach dem erfindungsgemäßen Verfahren

### Schritt (A):

Die zu beschichtenden Kunststoffplatten wurden für 5 min bei 80°C getempert. Dazu wurden die Platten in einen auf 80°C vorgeheizten und verschließbaren Ofen gelegt, die Ofentür geschlossen und nach Ablauf von 5 min aus dem Ofen entfernt.

### Schritt (B):

Anfolgend wurden die getemperten Kunststoffplatten bei Raumtemperatur unter Verwendung eines handelsüblichen Beflammungsautomaten (Firma Kirchgässner Elektrotechnik) beflammt. Die Beflammungszone der Beflammungsanlage besaß eine Breite von 3 cm. Dabei wurden die Kunststoffplatten, angesaugt an einen Roboterarm, senkrecht mit einer Bandgeschwindigkeit von 450 mm/s in einem Substrat-Flammenabstand von 7 cm an der Flamme vorbeigeführt. Die Beflammungsanlage wurde mit einem Propan/Luft-Volumenverhältnis von 1:25 bei einem Durchsatz des Brenngas/Luft-Gemisches von 425 l/min betrieben. Die Beflammung erfolgte in einem Beflammungsschritt, das heißt es wurde nicht in einem Beflammungszyklus mit mehreren einzelnen Beflammungsschritten beflammt. Zwischen dem Beenden von Schritt (A) und dem Beginn von Schritt (B) lag eine Zeitdauer von 30 min.

### 2.) Vergleichende Vorbehandlung (A)

Weitere Kunststoffsubstrate wurden gemäß des unter "1.) Schritt (A)" beschriebenen Vorgehens vorbehandelt. Es wurde also auf den Schritt (B) (Beflammen) verzichtet.

### 3.) Vergleichende Vorbehandlung (B)

Weitere Kunststoffsubstrate wurden gemäß des unter "1.) Schritt (B)" beschriebenen Vorgehens vorbehandelt. Es wurde also auf den Schritt (A) (Tempern) verzichtet.

### B) Beschichtung der vorbehandelten Kunststoffsubstrate

Bei dem zur Beschichtung eingesetzten wässrigen Beschichtungsmittel handelte es sich um den gemäß Tabelle 1 zusammengesetzten wässrigen Basislack. Die Herstellung des Basislacks erfolgte durch Zusammengeben und inniger Vermischung der in Tabelle 1 angegebenen Komponenten in einem Dissolver.

**Tabelle 1, Zusammensetzung des eingesetzten wässrigen Basislacks**

| **Komponente** | **Eingesetzte Gewichtsteile** |
|---|---|
| Handelsübliches Thixotropierungsmittel (Laponite RD) | 18,2 |
| handelsübliche Dispersion eines OHfunktionellen Polyurethanharzes (Wassergehalt: 66,0 Gew.-%, organische Lösemittel: 6,3 Gew.-%) | 31,9 |
| TMDD BG 52 (handelsübliches Netzmittel) | 0,5 |
| handelsübliche Dispersion eines OHfunktionellen Polyesterharzes (Wassergehalt: 17,7 Gew.-%, organische Lösemittel: 20,0 Gew.-%) | 3,0 |
| Butoxypropanol | 2,0 |
| Cymel 327 (handelsübliches Melaminformaldehydharz) | 4,2 |
| Neutralisationslösung (Dimethylethanolamin, 10% in Wasser) | 0,7 |
| handelsübliche Dispersion eines OHfunktionelle Acrylatharzes (Wassergehalt: 49,5 Gew.-%, organische Lösemittel: 13,0 Gew.-%) | 5,1 |
| Wasser | 2,1 |
| Foamstar MF324 (handelsüblicher Entschäumer) | 0,5 |
| Ethylhexanol | 3,9 |
| BYK 347 (handelsübliches Netzmittel) | 0,5 |
| Pluriol P900 (handelsübliches Polyethylenglycol) | 2,0 |
| Butyldiglykol | 4,7 |
| Isopropanol | 2,1 |
| Wasser | 1,8 |
| Neutralisationslösung (Dimethylethanolamin, 10% in Wasser) | 0,8 |
| Wasser | 2,2 |
| Viscalex HV 30 (handelsübliches Rheologiemittel) | 0,4 |
| Wasser | 2,0 |
| Tönpaste 1 (10-%-ige Dispersion des Pigments "Ruß Monarch 1400 in Wasser) | 10,1 |
| Tönpaste 2 (50-%-ige Dispersion des Pigments "Titanrutil 2310 in Wasser) | 0,1 |
| Wasser | 1,2 |

Der wässrige Basislack wurde auf unterschiedlichen, wie oben beschrieben vorbehandelten Kunststoffsubstraten pneumatisch appliziert, für 5 min bei 20°C abgelüftet und anschließend bei einer Temperatur von 80°C über eine Zeitdauer von 10 min eingebrannt. Die resultierende Trockenschichtdicke lag bei 15 Mikrometer. Die Zeitdauer zwischen dem Ende der Vorbehandlung und der Applikation des Beschichtungsmittels lag bei 30 min.

### C) Untersuchung der Haftungseigenschaften von Beschichtungen

Die Haftungseigenschaften der herstellten Beschichtungen wurden über einen allgemein bekannten Dampfstrahltest (DIN 55662:2009-12, 1 min Dampfbestrahlung bei 60°C, Druck 67 bar, senkrechte Entfernung vom Prüfkörper 10 cm) untersucht. Von jeder Beschichtung, definiert durch das Kunststoffsubstrat und die Vorbehandlung, wurden insgesamt 6 Proben hergestellt und jeweils einzeln untersucht.

Die Bewertung der Haftung erfolgte über eine ganzzahliges Notensystem mit Noten von 0 - 5, wobei die Note 0 für Beschichtungen vergeben wurde, die nach der Dampfstrahlbehandlung keine sichtbaren Spuren aufwiesen (sehr gute Haftung), die Note 5 für Beschichtungen vergeben wurde, die nach dem Dampfstrahltest sehr stark abgelöste Bereiche aufwiesen (ungenügende Haftung).

Tabelle 2 zeigt die Haftungseigenschaften der hergestellten Beschichtungen in Abhängigkeit von den eingesetzten Kunststoffsubstraten und deren Vorbehandlung. Aus den jeweils vorliegenden 6 Einzelnoten wurde der Mittelwert gebildet; die Mittelwerte sind auf eine Nachkommastelle gerundet angegeben.

**Tabelle 2, Haftungseigenschaften von Beschichtungen, wässriger Basislack auf Kunststoffsubstraten**

| **Kunststoffsubstrat** | **Vorbehandlung** | **Haftung** |
|---|---|---|
| | | |
| PP/EPDM 1¹ | Schritt (A) + Schritt (B) | 2,2 |
| PP/EPDM 1¹ | Schritt (A) | 5,0 |
| PP/EPDM 1¹ | Schritt (B) | 4,2 |
| PP/EPDM 2² | Schritt (A) + Schritt (B) | 1,3 |
| PP/EPDM 2² | Schritt (A) | 5,0 |
| PP/EPDM 2² | Schritt (B) | 4,5 |
| PC/ABS³ | Schritt (A) + Schritt (B) | 0 |
| PC/ABS³ | Schritt (A) | 5,0 |
| PC/ABS³ | Schritt (B) | 3,0 |

| | | |
|---|---|---|
| ¹ PP108MF10 (Sabic); PP/EPDM-Blend, 2 Gew.-% EPDM ² PP 95610 (Sabic); PP/EPDM-Blend, 20 Gew.-% EPDM ³ Cycoloy C1100 HF (Sabic); PC/ABS-Blend, 40 Gew.-% ABS | | |

Die gezeigten Ergebnisse belegen, dass die Haftungseigenschaften der nach dem erfindungsgemäßen Verfahren hergestellten Beschichtungen wesentlich besser sind als Haftungseigenschaften von Beschichtungen auf Kunststoffsubstraten, die ausschließlich mittels Tempern (Schritt (A)) oder Beflammung (Schritt (B)) vorbehandelt wurden.

### D) Untersuchung von Mehrschichtbeschichtungen

Es wurden Beschichtungen auf PP/EPDM-Kunststoffplatten hergestellt. Die Vorbehandlung der Substrate sowie die Applikation und Ablüftung des in Tabelle 1 angegebenen wässrigen Basislacks wurden analog der obigen Arbeitsvorschriften durchgeführt (Vergleiche "A) und "B)"). Vor der Härtung des Basislacks erfolgte allerdings die pneumatische Applikation eines handelsüblichen Klarlacks (vergleiche Tabelle 3), welcher anfolgend für 10 min bei Raumtemperatur abgelüftet wurde. Anschließend erfolgte die gemeinsame Härtung des applizierten wässrigen Basislacks (resultierende Trockenschichtdicke 15 Mikrometer) und des applizierten Klarlacks (resultierende Trockenschichtdicke 35 Mikrometer) bei einer Temperatur von 80°C über eine Zeitdauer von 30 min.

**Tabelle 3, Zusammensetzung des eingesetzten Klarlacks**

| **Komponente** | **Menge (in Gew.-%)** |
|---|---|
| handelsübliche Dispersion eines OHfunktionelle Acrylatharzes in organischen Lösemitteln | 50,9 |
| Setal 82166 SS-55 | 25,5 |
| Cyclohexanon | 3,9 |
| Solvent Naphtha 230/290 | 2,0 |
| handelsübliche Dispersion eines OHfunktionelle Acrylatharzes in organischen Lösemitteln | 9,8 |
| Disolucion de Silicona F-2 | 1,5 |
| 5-%-ige Lösung von Baysilon OL44 | 0,5 |
| Tinuvin 292 (handelsüblicher Lichtstabilisator) | 0,9 |
| Tinuvin 1130 (handelsüblicher UV-Absorber) | 0,9 |
| 1-%-ige Lösung von Dibutylzinnlaurat | 0,6 |
| Cumylhydroperoxid (80-%-ig) | 0,4 |
| 1-Methoxypropylacetat-2 | 3,1 |

Die resultierenden Mehrschichtbeschichtungen wurden analog des oben angegebenen Dampfstrahltests hinsichtlich Ihrer Haftungseigenschaften untersucht.

Tabelle 4 zeigt die entsprechenden Ergebnisse.

**Tabelle 4, Haftungseigenschaften von Mehrschichtbeschichtungen, Wässriger Basislack + Klarlack**

| **Kunststoffsubstrat** | **Vorbehandlung** | **Haftung** |
|---|---|---|
| | | |
| PP/EPDM 1¹ | Schritt (A) + Schritt (B) | 1,5 |
| PP/EPDM 1¹ | Schritt (A) | 5,0 |
| PP/EPDM 1¹ | Schritt (B) | 3,5 |
| PP/EPDM 2² | Schritt (A) + Schritt (B) | 0,7 |
| PP/EPDM 2² | Schritt (A) | 5,0 |
| PP/EPDM 2² | Schritt (B) | 2,2 |

| | | |
|---|---|---|
| ¹ PP108MF10 (Sabic); PP/EPDM-Blend, 2 Gew.-% EPDM ² PP 95610 (Sabic); PP/EPDM-Blend, 20 Gew.-% EPDM | | |

Die gezeigten Ergebnisse belegen, dass die Haftungseigenschaften der nach dem erfindungsgemäßen Verfahren hergestellten Mehrschichtbeschichtungen besser sind als Haftungseigenschaften von Mehrschichtbeschichtungen auf Kunststoffsubstraten, die ausschließlich mittels Tempern (Schritt (A)) oder Beflammung (Schritt (B)) vorbehandelt wurden.

### E) Variation der Vorbehandlung

Gemäß der unter "A)" angegebenen Arbeitsvorschrift wurden in einer weiteren Testreihe PP/EPDM-Testplatten (PP108MF10 (Sabic), PP/EPDM-Blend, 2 Gew.-% EPDM) über Schritt (A) und Schritt (B) vorbehandelt. Dabei wurde die Zeitdauer zwischen dem Ende von Schritt (A) und dem Beginn von Schritt (B) variiert. Nach der Vorbehandlung erfolgte die Herstellung von wie unter D) beschriebenen Mehrschichtbeschichtungen. Die hergestellten Mehrschichtbeschichtungen wurden wiederum mittels Dampfstrahltest untersucht. In Tabelle 5 sind die entsprechenden Ergebnisse im Vergleich zu einer Mehrschichtbeschichtung auf PP108MF10-Substraten, die lediglich nach Vorbehandlungsschritt (B) (Beflammung) vorbehandelt wurde, (Vergleichsmehrschichtbeschichtung) dargestellt. Angegeben sind die Verhältnisse (in %) der wie oben definierten Haftungsnoten für die gemäß Schritt (A) und Schritt (B) vorbehandelten Systeme zu den Haftungsnoten der Vergleichsmehrschichtbeschichtung (jeweils gerundet auf volle 5 beziehungsweise 10 %). Dabei bedeuten - in Übereinstimmung mit dem oben angegebenen Notensystem - kleinere Werte eine bessere Haftung und kleinere Werte als 100 % eine bessere Haftung als das Vergleichsystem (100 % entspricht dem normierten Bezugswert des Vergleichssystems, das heißt Vorbehandlung nur nach Vorbehandlungsschritt (B) (Beflammung)).

**Tabelle 5, Haftungseigenschaften von Mehrschichtbeschichtungen, Variation der Zeitdauer zwischen Schritt (A) und (B)**

| **Zeitdauer zwischen Schritt (A) und (B)** | **Haftung¹** |
|---|---|
| Nach 5 min beflammt | 60 % |
| Nach 10 min beflammt | 15 % |
| Nach 30 min beflammt | 60 % |
| Nach 60 min beflammt | 60 % |
| Nach 120 min beflammt | 225 % |

| | |
|---|---|
| ¹ Vergleichsmehrschichtbeschichtung: Mehrschichtbeschichtung auf PP108MF10, nur beflammt. | |

Die Ergebnisse zeigen den Einfluss der Zeitdauer zwischen Schritt (A) und Schritt (B) bei der Vorbehandlung auf die Qualität der Haftung der hergestellten Beschichtungen. Die beste Haftung wird bei einer Zeitdauer von 10 min erreicht. Nach 30 und 60 min ist bereits eine schlechtere Haftung festzustellen als bei dem 10 min System. Die Haftung ist jedoch nach wie vor besser als bei der Vergleichsmehrschichtbeschichtung. Nach 120 min ist bereits eine schlechtere Haftung als beim Vergleichsystem festzustellen.

## Patentansprüche

1. Verfahren zur Beschichtung von Kunststoffsubstraten mit einem wässrigen Beschichtungsmittel enthaltend mindestens ein organisches Polymer als Bindemittel, wobei das Beschichtungsmittel auf die Oberfläche des Kunststoffsubstrats appliziert wird und anschließend gehärtet wird,
**dadurch gekennzeichnet, dass**
das Kunststoffsubstrat vor der Applikation des Beschichtungsmittels vorbehandelt wird, wobei die Vorbehandlung die beiden folgenden separaten Schritte in der angegebenen Reihenfolge umfasst:
(A) Tempern eines Kunststoffsubstrats bei einer Umgebungstemperatur im Bereich von 60°C bis 160°C für eine Zeitdauer im Bereich von 1 min bis 20 min,
(B) Beflammung der Oberfläche des gemäß Schritt (A) vorbehandelten Kunststoffsubstrats,
wobei zwischen dem Beenden von Schritt (A) und dem Beginn von Schritt (B) eine Zeitdauer von bis zu 90 min liegt.

2. Verfahren nach Anspruch 1, **dadurch gekennzeichnet, dass** Schritt (A) bei einer Umgebungstemperatur im Bereich von 70°C bis 120°C durchgeführt wird.

3. Verfahren nach Anspruch 1 oder 2, **dadurch gekennzeichnet, dass** Schritt (A) für eine Zeitdauer im Bereich von 3 min bis 8 min durchgeführt wird.

4. Verfahren nach einem der Ansprüche 1 bis 3, **dadurch gekennzeichnet, dass** Schritt (A) bei einer Umgebungstemperatur durchgeführt wird, die mindestens 5°C geringer ist, als die Vicat-Erweichungstemperatur des jeweils eingesetzten Kunststoffsubstrats.

5. Verfahren nach einem der Ansprüche 1 bis 4, **dadurch gekennzeichnet, dass** zwischen dem Beenden von Schritt (A) und dem Beginn von Schritt (B) eine Zeitdauer im Bereich von 1 min bis 60 min liegt.

6. Verfahren nach Anspruch 5, **dadurch gekennzeichnet, dass** zwischen dem Beenden von Schritt (A) und dem Beginn von Schritt (B) eine Zeitdauer im Bereich von 5 und 20 min liegt.

7. Verfahren nach einem der Ansprüche 1 bis 6, **dadurch gekennzeichnet, dass** das Kunststoffsubstrat übliche Kunststoffe ausgewählt aus der Gruppe bestehend aus Polystyrol (PS), Polyvinylchlorid (PVC), Polyurethan (PUR), glasfaserverstärkte ungesättigte Polyester, Polymethylmethacrylat (PMMA), Polyphenylensulfid (PPS), Polyoxymethylen (POM), Polyphenylenether (PPE), Polyphenylenoxid (PPO), Polyharnstoff, Polybutadienterephthalat (PBT), Polycarbonat (PC), AcrylnitrilButadien-Styrol-Copolymere (ABS), Polyolefine wie Polypropylen (PP) und Polypropylen (PP) modifiziert mit Ethylen-Propylen-Dien-Mischpolymeren (EPDM) sowie Mischungen dieser Kunststoffe, enthält.

8. Verfahren nach einem der Ansprüche 1 bis 7, **dadurch gekennzeichnet, dass** das Kunststoffsubstrat als Kunststoffe Polypropylen (PP), modifiziert mit Ethylen-Propylen-Dien-Mischpolymeren (EPDM), enthält.

9. Verfahren nach einem der Ansprüche 1 bis 8, **dadurch gekennzeichnet, dass** das Kunststoffsubstrat als Kunststoffe Polypropylen (PP), modifiziert mit Ethylen-Propylen-Dien-Mischpolymer (EPDM)-Anteilen von nicht höher als 25 Gew.-%, enthält.

10. Verfahren nach einem der Ansprüche 1 bis 9, **dadurch gekennzeichnet, dass** das wässrige Beschichtungsmittel einen Gesamtanteil von 15 bis 60 Gew.-%, bezogen auf die Gesamtmenge des Beschichtungsmittels, mindestens eines organischen OHfunktionellen Polymers als Bindemittel und mindestens eines Vernetzers, ausgewählt aus der Gruppe der vollveretherten und/oder teilveretherten Aminoplastharze, der monomeren und/oder polymeren Polyamine und/oder der monomeren und/oder polymeren blockierten und/oder freien Polyisocyanate, enthält.

11. Verfahren nach einem der Ansprüche 1 bis 10, **dadurch gekennzeichnet, dass** das wässrige Beschichtungsmittel mindestens ein OH-funktionelles Polyurethan-, Polyester- und/oder Poly(meth)acrylatharz als Bindemittel und mindestens ein vollverethertes und/oder teilverethertes Melamin-Formaldehyd-Harz als Vernetzer enthält.

12. Verfahren nach einem der Ansprüche 1 bis 11, **dadurch gekennzeichnet, dass** das wässrige Beschichtungsmittel mindestens 20 Gew.-% Wasser, bezogen auf die Gesamtmenge des Beschichtungsmittels, enthält.

13. Verfahren nach einem der Ansprüche 1 bis 12, **dadurch gekennzeichnet, dass** das wässrige Beschichtungsmittel ein pigmentierter Basislack ist.

14. Verfahren nach Anspruch 13, **dadurch gekennzeichnet, dass** nach der Applikation des pigmentierten Basislacks mindestens ein weiteres Beschichtungsmittel appliziert und gemeinsam mit dem applizierten Basislack gehärtet wird, wobei es sich bei mindestens einem der weiteren Beschichtungsmittel um einen Klarlack handelt.

15. Beschichtetes Kunststoffsubstrat, **dadurch gekennzeichnet, dass** es durch das Verfahren gemäß einem der Ansprüche 1 bis 14 beschichtet wurde.

16. Beschichtetes Kunststoffsubstrat nach Anspruch 15, **dadurch gekennzeichnet, dass** es mit einer Mehrschichtbeschichtung, umfassend einen Basislack und einen Klarlack, beschichtet ist.

## Claims

1. Method for coating plastics substrates with an aqueous coating composition comprising at least one organic polymer as binder, the coating composition being applied to the surface of the plastics substrate and being subsequently cured,
**characterized in that**
the plastics substrate is pretreated before the coating composition is applied, the pretreatment comprising the two following separate steps in the order stated:
(A) heat-treating a plastics substrate at an ambient temperature in the range from 60°C to 160°C for a period in the range from 1 minute to 20 minutes,
(B) flaming the surface of the plastics substrate pretreated as per step (A),
there being a period of up to 90 minutes between the ending of step (A) and the beginning of step (B).

2. Method according to Claim 1, **characterized in that** step (A) is carried out at an ambient temperature in the range from 70°C to 120°C.

3. Method according to Claim 1 or 2, **characterized in that** step (A) is carried out for a period in the range from 3 minutes to 8 minutes.

4. Method according to any of Claims 1 to 3, **characterized in that** step (A) is carried out at an ambient temperature which is at least 5°C lower than the Vicat softening temperature of the particular plastics substrate used.

5. Method according to any of Claims 1 to 4, **characterized in that** there is a period in the range from 1 minute to 60 minutes between the ending of step (A) and the beginning of step (B).

6. Method according to Claim 5, **characterized in that** there is a period in the range from 5 and 20 minutes between the ending of step (A) and the beginning of step (B).

7. Method according to any of Claims 1 to 6, **characterized in that** the plastics substrate comprises customary plastics selected from the group consisting of polystyrene (PS), polyvinyl chloride (PVC), polyurethane (PUR), glass fiber-reinforced unsaturated polyesters, polymethyl methacrylate (PMMA), polyphenylene sulfide (PPS), polyoxymethylene (POM), polyphenylene ethers (PPE), polyphenylene oxide (PPO), polyurea, polybutadiene terephthalate (PBT), polycarbonate (PC), acrylonitrile-butadiene-styrene copolymers (ABS), polyolefins such as polypropylene (PP) and polypropylene (PP) modified with ethylene-propylene-diene copolymers (EPDM), and mixtures of these plastics.

8. Method according to any of Claims 1 to 7, **characterized in that** the plastics substrate comprises, as plastics, polypropylene (PP), modified with ethylene-propylene-diene copolymers (EPDM).

9. Method according to any of Claims 1 to 8, **characterized in that** the plastics substrate comprises, as plastics, polypropylene (PP), modified with ethylene-propylene-diene copolymer (EPDM) fractions of no higher than 25% by weight.

10. Method according to any of Claims 1 to 9, **characterized in that** the aqueous coating composition comprises a total fraction of 15% to 60% by weight, based on the total amount of the coating composition, of at least one organic OH-functional polymer as binder and of at least one crosslinker selected from the group of fully etherified and/or partially etherified amino resins, monomeric and/or polymeric polyamines and/or monomeric and/or polymeric, blocked and/or free polyisocyanates.

11. Method according to any of Claims 1 to 10, **characterized in that** the aqueous coating composition comprises at least one OH-functional polyurethane, polyester and/or poly(meth)acrylate resin as binder and at least one fully etherified and/or partially etherified melamine-formaldehyde resin as crosslinker.

12. Method according to any of Claims 1 to 11, **characterized in that** the aqueous coating composition comprises at least 20% by weight of water, based on the total amount of the coating composition.

13. Method according to any of Claims 1 to 12, **characterized in that** the aqueous coating composition is a pigmented basecoat material.

14. Method according to Claim 13, **characterized in that** at least one further coating composition is applied after the pigmented basecoat material has been applied, and is cured jointly with the applied basecoat material, at least one of the further coating compositions being a clearcoat material.

15. Coated plastics substrate **characterized in that** it has been coated by the method according to any of Claims 1 to 14.

16. Coated plastics substrate according to Claim 15, **characterized in that** it is coated with a multilayer coating comprising a basecoat material and a clearcoat material.

## Revendications

1. Procédé de revêtement de substrats en plastique avec un agent de revêtement aqueux contenant au moins un polymère organique en tant que liant, l'agent de revêtement étant appliqué sur la surface du substrat en plastique, puis étant durci,
**caractérisé en ce que**
le substrat en plastique est prétraité avant l'application de l'agent de revêtement, le prétraitement comprenant les deux étapes séparées suivantes dans l'ordre indiqué :
(A) le recuit d'un substrat en plastique à une température ambiante dans la plage allant de 60 °C à 160 °C pendant une durée dans la plage allant de 1 minute à 20 minutes,
(B) l'exposition à une flamme de la surface du substrat en plastique prétraité selon l'étape (A),
une durée de jusqu'à 90 minutes se trouvant entre la fin de l'étape (A) et le début de l'étape (B).

2. Procédé selon la revendication 1, **caractérisé en ce que** l'étape (A) est réalisée à une température ambiante dans la plage allant de 70 °C à 120 °C.

3. Procédé selon la revendication 1 ou 2, **caractérisé en ce que** l'étape (A) est réalisée pendant une durée dans la plage allant de 3 minutes à 8 minutes.

4. Procédé selon l'une quelconque des revendications 1 à 3, **caractérisé en ce que** l'étape (A) est réalisée à une température ambiante qui est au moins 5 °C en dessous de la température de ramollissement de Vicat du substrat en plastique utilisé.

5. Procédé selon l'une quelconque des revendications 1 à 4, **caractérisé en ce qu'**une durée dans la plage allant de 1 minute à 60 minutes se trouve entre la fin de l'étape (A) et le début de l'étape (B).

6. Procédé selon la revendication 5, **caractérisé en ce qu'**une durée dans la plage allant de 5 à 20 minutes se trouve entre la fin de l'étape (A) et le début de l'étape (B).

7. Procédé selon l'une quelconque des revendications 1 à 6, **caractérisé en ce que** le substrat en plastique contient des plastiques usuels choisis dans le groupe constitué par le polystyrène (PS), le polychlorure de vinyle (PVC), le polyuréthane (PUR), le polyester insaturé renforcé par des fibres de verre, le polyméthacrylate de méthyle (PMMA), le polysulfure de phénylène (PPS), le polyoxyméthylène (POM), le polyéther de phénylène (PPE), le polyoxyde de phénylène (PPO), la polyurée, le polybutadiène téréphtalate (PBT), le polycarbonate (PC), les copolymères d'acrylonitrile-butadiène-styrène (ABS), les polyoléfines telles que le polypropylène (PP) et le polypropylène (PP) modifié avec des copolymères éthylène-propylène-diène (EPDM), ainsi que les mélanges de ces plastiques.

8. Procédé selon l'une quelconque des revendications 1 à 7, **caractérisé en ce que** le substrat en plastique contient en tant que plastique du polypropylène (PP) modifié avec des copolymères éthylène-propylène-diène (EPDM).

9. Procédé selon l'une quelconque des revendications 1 à 8, **caractérisé en ce que** le substrat en plastique contient en tant que plastique du polypropylène (PP) modifié avec des proportions de copolymères éthylène-propylène-diène (EPDM) inférieures ou égales à 25 % en poids.

10. Procédé selon l'une quelconque des revendications 1 à 9, **caractérisé en ce que** l'agent de revêtement aqueux contient une proportion totale de 15 à 60 % en poids, par rapport à la quantité totale de l'agent de revêtement, d'au moins un polymère organique à fonction OH en tant que liant et d'au moins un agent de réticulation choisi dans le groupe constitué par les résines aminoplastes entièrement éthérées et/ou partiellement éthérées, les polyamines monomères et/ou polymères, et/ou les polyisocyanates bloqués et/ou libres monomères et/ou polymères.

11. Procédé selon l'une quelconque des revendications 1 à 10, **caractérisé en ce que** l'agent de revêtement aqueux contient au moins une résine de polyuréthane, de polyester et/ou de poly(méth)acrylate à fonction OH en tant que liant et au moins une résine de mélamine-formaldéhyde entièrement éthérée et/ou partiellement éthérée en tant qu'agent de réticulation.

12. Procédé selon l'une quelconque des revendications 1 à 11, **caractérisé en ce que** l'agent de revêtement aqueux contient au moins 20 % en poids d'eau, par rapport à la quantité totale de l'agent de revêtement.

13. Procédé selon l'une quelconque des revendications 1 à 12, **caractérisé en ce que** l'agent de revêtement aqueux est une laque de base pigmentée.

14. Procédé selon la revendication 13, **caractérisé en ce qu'**après l'application de la laque de base pigmentée, au moins un autre agent de revêtement est appliqué et durci conjointement avec la laque de base appliquée, ledit au moins un autre agent de revêtement étant une laque transparente.

15. Substrat en plastique revêtu, **caractérisé en ce qu'**il a été revêtu par le procédé selon l'une quelconque des revendications 1 à 14.

16. Substrat en plastique revêtu selon la revendication 15, **caractérisé en ce qu'**il est revêtu avec un revêtement multicouche, comprenant une laque de base et une laque transparente.
